# EUROPEAN PATENT APPLICATION

(11) **EP 4 764 380 A1**
(43) Date of publication of application: **24.06.2026**
(21) Application number: 25224516.2
(22) Date of filing: 17.12.2025
(51) Int. Cl.: F27D 17/30, F27D 19/00

(54) **FURNACE ATMOSPHERE CONTROL DEVICE AND METHOD**

(30) Priority: 21.12.2024 WO PCT/CN2024/119668
(71) Applicant: L'Air Liquide, Société Anonyme pour l'Etude et l'Exploitation des Procédés Georges Claude, 75007 Paris (FR)
(72) Inventor: WANG, Ronghui, Shanghai, 201108 (CN); ZHOU, Yun, Shanghai, 201108 (CN)
(74) Representative: Air Liquide

(57) **Abstract**

The present application discloses a furnace atmosphere control device and method. The furnace atmosphere control device comprises an adjustment device, a sensor system, and a control unit. The exhaust unit in the adjustment device is configured with a cover plate, a connecting rod, a crank, and an actuator, wherein the connecting rod is used to push and pull the cover plate to move, changing the position of the cover plate, thereby changing the area of the outlet of the exhaust unit. The furnace atmosphere control device of the present application enables the sintering atmosphere within the calcination furnace to be maintained at a high oxygen concentration, and can maintain continuous fluctuations in furnace pressure, ensuring the calcination effect of the raw cathode materials. The furnace atmosphere control method of the present application achieves automatic and real-time adjustment, being safe and efficient.

## Description

### Technical Field

The present invention relates to the field of battery materials. It relates to a calcination apparatus and method for secondary battery cathode materials. More specifically, it relates to a furnace atmosphere control device and method for a cathode material calcination apparatus.

### Background Technology

Lithium-ion secondary batteries are high-efficiency rechargeable batteries. Depending on the cathode material, lithium-ion batteries can be classified into various types, such as lithium cobalt oxide, lithium manganese oxide, lithium iron phosphate, and ternary batteries. They are widely used in fields such as consumer electronics, new energy vehicles, and energy storage systems. The preparation of cathode materials for secondary batteries typically requires sintering in a high-purity oxygen atmosphere. A refractory sagger containing the cathode material is calcined in a calcination furnace at a temperature of 400°C to 1100°C according to the material characteristics.

For example, a Japanese Patent with Publication No.JP2016110982A describes a method for producing a positive electrode active material. It includes a mixing step of mixing lithium carbonate and a compound containing a metal element other than Li, respectively, and a firing step of firing the mixture obtained in the mixing step in an oxidizing atmosphere to obtain a lithium composite compound. The firing step performs heat treatment in three stages, and the second heat treatment step and the third heat treatment step are performed in an oxidizing atmosphere with an oxygen concentration of 80% or more.

As another example, a Japanese Patent with Publication No. JP2010-269947 describes a method for producing a lithium-containing composite oxide. It comprises: a step of firing raw materials containing a lithium-containing hydroxide and a nickel-containing oxide or hydroxide in a reaction chamber under an oxidizing atmosphere to synthesize the lithium-containing composite oxide; a step of supplying oxygen to the reaction chamber; a step of discharging a mixed gas containing the oxygen and water vapor generated in the step from the reaction chamber; a step of separating water vapor from the mixed gas and recovering oxygen; and a step of supplying the oxygen recovered in the step to the reaction chamber.

The calcination process of ternary cathode materials is controlled by the cation diffusion rate. Therefore, during calcination in an oxidizing atmosphere, a large amount of oxygen accumulates on the surface, increasing cation vacancies, which is conducive to accelerating cation diffusion and promoting calcination. Thus, the calcination process of ternary cathode materials must ensure sufficient oxygen partial pressure. This is very different from other heat treatment processes that typically aim to reduce the oxygen content in the atmosphere to avoid oxidation. Conversely, producing high-quality cathode materials requires calcining precursors at high temperatures in a strong oxidizing atmosphere.

In the calcination process, the cathode material contained in the refractory sagger generates water vapor and carbon dioxide gas. It is difficult for the water vapor and carbon dioxide gas generated by the cathode material in the lower layers to be discharged to the outside of the sagger, which seriously affects the oxygen partial pressure inside the calcination furnace. When the concentration of carbon dioxide in the atmosphere becomes high, there is a tendency for the reaction between lithium carbonate and the nickel compound to be significantly hindered, and there is a tendency for the amount of carbonate components incorporated into the crystals of the lithium composite compound to become significant, resulting in deterioration of charge/discharge capacity performance.

Manufacturers usually increase oxygen partial pressure by reducing the calcination amount, thereby reducing the amount of exhaust gas. However, reducing the calcination amount increases unit energy consumption and is unfavorable for increasing production capacity. On the other hand, in a calcination furnace where multiple layers of saggers are placed, the gas volume contacting the materials in the upper and lower layers is different, and combined with the stacking thickness of the cathode material raw material itself, insufficient oxygen partial pressure makes it difficult for oxygen to penetrate the raw material for effective reaction. The sagger is usually a semi-enclosed cuboid, and the cathode material is placed inside the sagger for calcination. The cathode material powder covers the sagger, and the atmosphere in the calcination furnace cannot circulate efficiently with the atmosphere inside the sagger, resulting in low quality or uneven performance of the sintered product. The cathode material in the lower part (bottom) and central part inside the sagger cannot fully contact the sintering atmosphere, causing insufficient reaction and lower sintering quality.

Therefore, the oxygen content in the atmosphere has a very significant impact on product quality and consistency. Currently, most manufacturers use a gas circuit system composed of main pipes, branch pipes, flow meters, control valves, etc., to manually control the intake flow rate of oxygen-enriched gas entering the calcination furnace. That is, operators manually adjust dozens of rotameters based on experience. This method places high demands on the technical level of the operators. It is often necessary to adjust the opening of the corresponding rotameter based on the technical indicators of the sintered powder, repeating this until a product meeting the requirements is sintered. This adjustment method has high production costs and high process difficulty. To avoid these adjustments and any quality issues, operators most often adjust the intake flow rate of oxygen-enriched gas, leading to excessive oxygen consumption and increased production costs.

In addition, during the sintering process of the cathode material, the pressure inside the furnace is crucial. On one hand, it is necessary to ensure that the pressure inside the furnace is greater than the pressure outside the furnace to prevent air from entering the furnace. On the other hand, it is also necessary to quickly discharge exhaust gases generated during the sintering process (such as water, carbon dioxide, etc.). The solution in the prior art is to continuously increase the intake flow rate to maintain positive pressure. However, this requires very expensive mass flow meters and also consumes a large amount of oxygen additionally. Moreover, once the intake flow rate of oxygen-enriched gas fluctuates, negative pressure is easily generated inside the furnace, causing air to enter the furnace and affecting the quality of the cathode material.

A Chinese Patent with Publication No. CN209416082U discloses an L-shaped flue device for an atmosphere protection kiln. A gate valve is installed on the smoke exhaust pipe, and by controlling the opening and closing of the gate valve, the flue gas in the furnace chamber can be discharged outward. A smoke outlet is provided at the top of the smoke exhaust pipe, wherein the smoke outlet communicates with a main smoke exhaust pipe. A furnace chamber is provided between refractory bricks and alumina hollow ball bricks. Several furnace rollers are provided inside the furnace chamber. Bearing seats are installed on the outer walls on the left and right sides of the refractory bricks. The saggers loaded with materials are placed on the furnace rollers and conveyed forward as the furnace rollers rotate. However, the gate valve here can only be fully opened or fully closed and does not have a regulating function. This means the opening extent of the gate valve is fixed, and the opening extent of the smoke exhaust pipe outlet cannot be flexibly changed to adjust the oxygen partial pressure inside the furnace.

There are also solutions in the prior art where a rectangular damper is configured at the gate valve of the smoke exhaust pipe. The damper is perpendicular to the smoke exhaust pipe, and often requires an operator to climb to the top of the furnace to manually pull out or push in the damper to adjust its position.

What is desired is to maintain positive pressure inside the calcination furnace. There is a need to find a control device and method capable of continuous, automatic, and on-demand control, while minimizing the waste of oxygen-enriched gas.

### Summary of the Invention

The general objective of the present disclosure is to provide a furnace atmosphere control device and method, and a calcination furnace apparatus. The aim is to maintain the sintering atmosphere inside the calcination furnace at a high oxygen concentration and remove impurity components from the atmosphere. This enables multi-stage heat treatment where each stage requires maintaining the atmosphere at a high oxygen concentration. Additionally, it is desired to make the sintering time sufficiently long to ensure the cathode material fully reacts with oxygen.

Another objective is to solve the problem where existing manual systems require manual adjustment by operators, making it impossible to easily assess the impact of these adjustments in real-time.

A first aspect of the present application discloses a furnace atmosphere control device, comprising:
an adjustment device, wherein the adjustment device comprises a flow regulation unit and/or an exhaust unit, wherein the flow regulation unit is connected to a gas supply device that supplies oxygen-enriched gas into a furnace;
wherein the exhaust unit comprises:
   a cover plate, wherein the cover plate partially covers an outlet of the exhaust unit;
   a connecting rod, wherein one end of the connecting rod is connected to a crank and the other end is connected to the cover plate, and the connecting rod is used to push and pull the cover plate to move;
   a crank, wherein one end of the crank is connected to an actuator and the other end is pivotally connected (via a crank pin) to the connecting rod; and
   an actuator, wherein the actuator receives an input signal to implement angle and/or position control of the connecting rod;
   a sensor system, wherein the sensor system is selected from the group consisting of: an oxygen concentration sensor, a moisture analyzer, a pressure sensor, a temperature sensor, and combinations thereof; and
   a control unit, wherein the control unit communicates with the adjustment device, the sensor system, and the gas supply device, and the control unit is programmed to regulate an intake flow rate of the oxygen-enriched gas and/or an area of the outlet of the exhaust unit.

Further, when the intake flow rate of the oxygen-enriched gas remains constant, the control unit is programmed to only regulate the area of the outlet of the exhaust unit.

Further, a rotational motion of the crank driven by the actuator is converted into a linear motion of the connecting rod.

Further, the crank rotates between 0 and 90°, thereby linearly pushing and pulling the cover plate.

Further, the control unit is programmed to receive signals indicating oxygen concentration, water content, pressure, and temperature from the oxygen concentration sensor, the moisture analyzer, the pressure sensor, and the temperature sensor, respectively.

Further, the pressure sensor indicates a pressure value between 0 and 300 Pa, preferably between 250 Pa and 300 Pa.

Further, the pressure sensor indicates that the pressure value fluctuates in continuous cycles.

A second aspect of the present application discloses a cathode material calcination apparatus, comprising a calcination furnace, at least one gas supply device, and the furnace atmosphere control device according to the first aspect.

A third aspect of the present application discloses a continuous real-time furnace atmosphere control method, wherein based on at least one measured factor data, a characteristic parameter is regulated using the furnace atmosphere control device according to the first aspect, wherein the characteristic parameter comprises a moving distance of the cover plate along an axial direction of the connecting rod, the area of the outlet of the exhaust unit, and/or a flow rate value of the flow regulation unit.

Further, each factor data comprises the intake flow rate of the oxygen-enriched gas, oxygen concentration, temperature, pressure, and water content.

Further, based on each factor data, the control unit correspondingly performs the following controls according to the generated characteristic parameter:
(1) decreasing or increasing the supplied intake flow rate of the oxygen-enriched gas relative to a set value; or
(2) decreasing or increasing the area of the outlet of the exhaust unit; or
(3) increasing the supplied intake flow rate of the oxygen-enriched gas relative to a set value, and increasing the area of the outlet of the exhaust unit; or
(4) decreasing the supplied intake flow rate of the oxygen-enriched gas relative to a set value, and decreasing the area of the outlet of the exhaust unit.

Further, the furnace atmosphere control method comprises the steps of:
(i) transmitting the oxygen concentration, temperature, pressure, and water content measured by respective sensors to the control unit, and comparing them with stored or default preset values;
(ii) generating, by the control unit, a control signal, wherein the control signal is used to regulate each characteristic parameter.

Further, standard or past factor data related to the furnace process and exhaust and their corresponding characteristic parameters are utilized and stored in the control unit.

Compared with the prior art, the technical solution provided by the present application has the following advantages:
1. The furnace atmosphere control device of the present application allows the sintering atmosphere in the calcination furnace to be maintained at a high oxygen concentration and continuous positive pressure, ensuring the calcination effect of the raw cathode material.
2. The furnace atmosphere control device and method of the present application achieve uniform exposure of the oxygen-enriched gas to the raw cathode material, enabling sufficient contact between the oxygen-enriched gas and the raw material in the calcination furnace, reducing dead zones.
3. The furnace atmosphere control method of the present application achieves automatic, real-time, and accurate adjustment, does not require frequent manual operation by operators, and is safe and efficient.

### Brief Description of Drawings

The advantages and spirits of the present application can be further understood through the following detailed description of the invention and the drawings.
FIG.1 represents a top view of a furnace atmosphere control device in an embodiment of the present application.
FIG.2 represents a schematic diagram of a furnace atmosphere control device in an embodiment of the present application.
FIG.3 represents a furnace pressure trend chart within 12 hours in an embodiment of the present application.
FIG.4 represents a furnace pressure trend chart in 22 randomly selected cycles in an embodiment of the present application.
FIG.5 represents the capacity retention results of secondary batteries assembled using the cathode material prepared in an embodiment of the present application.
FIG.6 represents the capacity retention results of secondary batteries assembled using the cathode material prepared in a comparative example of the present application.

In the figures: 101 represents actuator, 102 represents crank, 103 represents crank pin, 104 represents connecting rod, 105 represents exhaust unit outlet, 106 represents limit block, 107 represents guide rail, 108 represents cover plate.

### Detailed Description

Specific embodiments of the present application are described in detail below with reference to the figures. However, the present application should be understood as not being limited to such embodiments described below, and the technical concept of the present application may be implemented in combination with other known technologies or other technologies having the same functions as those known technologies.

### Explanation of Terms

In the following description of specific embodiments, in order to clearly illustrate the structure and mode of operation, many directional terms will be used for description. However, terms such as "front", "rear", "left", "right", "outer", "inner", "outward", "inward", "axial", "radial" and the like should be understood as terms for convenience and should not be understood as limiting terms.

In the following description of specific embodiments, it should be understood that the orientation or positional relationships indicated by terms such as "length", "width", "upper", "lower", "front", "rear", "left", "right", "vertical", "horizontal", "top", "bottom", "inner", "outer", etc., are based on the orientation or positional relationships shown in the drawings, and are merely for convenience of simplified description, rather than indicating or implying that the device or element referred to must have a specific orientation or be constructed and operated in a specific orientation, and therefore should not be construed as a limitation on the present application. Furthermore, when a first structure is described as being positioned "above" or "below" a second structure, this should be understood to mean that the first structure is positioned further from or closer to a horizontal plane.

In addition, the terms "first" and "second" are used for descriptive purposes only and are not to be construed as indicating or implying relative importance or implicitly indicating the quantity of the indicated technical features. Thus, a feature defined with "first" or "second" may explicitly or implicitly include one or more of such features. In the description of the present application, the meaning of "plurality" is two or more, unless clearly and specifically defined otherwise. Similarly, a qualifier such as "a" or "one" appearing herein does not refer to a limitation on quantity, but rather describes a technical feature that has not appeared previously. Similarly, unless a noun is modified by a specific quantity quantifier, it should be considered herein to include both singular and plural forms; in the technical solution, it can include a singular number of the technical feature or a plural number of the technical feature. Similarly, modifiers such as "about" and "approximately" appearing before numerals herein generally include the number itself, and their specific meanings should be understood in conjunction with the context.

It should be understood that in this application, "at least one (item)" refers to one or more, and "plurality" refers to two or more. "And/or" is used to describe the association relationship of associated objects, indicating that three relationships may exist. For example, "A and/or B" may indicate: A exists alone, B exists alone, and both A and B exist, where A and B may be singular or plural. The character "/" generally indicates that the associated objects before and after are in an "or" relationship. "At least one of the following" or similar expressions refers to any combination of these items, including any combination of single item(s) or plural items. For example, at least one of a, b, or c can represent: a, b, c, "a and b", "a and c", "b and c", or "a and b and c", wherein a, b, c may be single or multiple.

In this application, unless otherwise clearly specified and limited, terms such as "install", "connect", "link", and "fix" should be understood in a broad sense. For example, it may be a fixed connection, a detachable connection, or an integral formation; it may be a mechanical connection or an electrical connection; it may be a direct connection, or an indirect connection through an intermediate medium, or it may be an internal communication between two elements or an interaction relationship between two elements. For those of ordinary skill in the art, the specific meanings of the above terms in the present application can be understood according to specific situations. "Fixedly connected" or "fixed connection" or "non-movably connected" is understood to mean that the connection between two or more structural members is not configured to provide relative movement. An embodiment of a fixed connection is a welded joint or a bolted connection, and in some cases, weld seams and bolted connections. "Movably connected" or "movable" or "moving connection" is understood to mean a connection between two or more structural members that allows horizontal and/or vertical relative movement between the members under extreme dynamic loads. Such connections typically do not allow movement under static loads or general dynamic loads (e.g., such as those exerted by light/moderate wind).

The terms "unit", "piece", "object", and "module" described in this specification represent a unit for processing at least one function and operation, and may be implemented by hardware components or software components and combinations thereof.

The term "axial" refers to a direction generally parallel to the axis of rotation, axis of symmetry, or centerline of a component or components. For example, in a cylinder having a centerline and opposing circular ends, the "axial" direction may refer to the direction extending parallel to the centerline between the opposing ends. Furthermore, the term "radial" as used herein may refer to a direction or relationship of a component relative to a line extending perpendicularly outward from a shared centerline, axis, or similar reference.

In addition, in this specification and the like, "calcination furnace" refers to a device for heating and calcining raw materials. For example, terms such as "furnace", "kiln", "heating device", "sintering device", "sintering furnace", etc., may also be used instead.

The terms "high pressure" and "medium pressure" mean that high pressure is higher than medium pressure, and the difference between the two may be relatively small.

The terms "high temperature" and "low temperature" mean that high temperature is higher than low temperature, and the difference between the two may be relatively small.

As used herein, the term "communication" refers to the ability to send and receive information, data, signals, controls, and commands via any known technology. For example, communication between components of the furnace atmosphere control device may be performed via one or more technologies, including but not limited to fixed wires or wireless networks, such as Local Area Network (LAN), Wireless Local Area Network (WLAN), Wide Area Network (WAN), Personal Area Network (PAN), Wireless Personal Area Network (WPAN), telephone networks (such as cellular networks or circuit-switched networks), internal networks, external networks, peer-to-peer networks, Virtual Private Networks (VPN), the Internet, or other communication networks/links.

The calcination furnace includes a heating space, an insulation space, and a cooling space that are sequentially connected. Wherein the cathode material gradually rises from an initial temperature until the temperature stabilizes. Moreover, this temperature should be fairly "constant" or maintained near the required average temperature. Sintering may last for 50 minutes to 300 minutes at a sintering temperature in the range of 400°C to 800°C. The sintering time may include temperature ramping to gradually heat the lithiated material at a controlled rate.

Therefore, the term "standard" is a synonym for terms such as "target" or "set" or "preset" used by those skilled in the art, for example in the expressions "preset value" or "set value".

The oxygen-enriched atmosphere refers to bringing oxygen-enriched gas into full contact with the raw materials in the sintering device through a corresponding oxygen supply device. The oxygen-enriched gas can have maximum contact with the mixture. The oxygen concentration of the oxygen-enriched gas is preferably 90% or more, more preferably 91%, 93%, 95%, 97%, or even 99% or more.

The oxygen supply device may be constituted by, for example, gas tanks or gas cylinders storing oxygen, VSA (Vacuum Swing Adsorption) type, PVSA (Pressure Vacuum Swing Adsorption), PTSA (Pressure Thermal Swing Adsorption) type, gas separation membrane type, or other types of oxygen generation devices. The oxygen supply device provides oxygen-enriched gas into the calcination furnace through an oxygen transport device. The molar concentration of oxygen in the oxygen-enriched gas here is at least 90%, more preferably at least 93%, more preferably at least 95%, and most preferably at least 99%.

The term "control unit" covers a unit that controls at least one calcination furnace, or may independently control all or several components of the calcination furnace. The control unit may include at least one of the following: a microcontroller, a microprocessor, a computer. The communication method between the control unit and each component is not limited. Advantageously, the control unit comprises a programmable controller, also known as a PLC (Programmable Logic Controller) system, i.e., a control system for industrial processes. The programmable controller includes a human-machine interface for monitoring and a digital communication network. The PLC system may include several modular controllers which control respective subsystems. According to one implementation possibility, the control unit includes a human-machine interface, which includes an input interface (e.g., a touch screen) allowing a user to input instructions for the control unit and/or factor data specifically related to the furnace process and exhaust.

An "actuator" or "operator " is a mechanism by which a control system, such as a mechanical or electrical system, acts on the environment. Specifically, an actuator can be used to control the operation of a device.

Specific embodiments of the present application are described in detail below with reference to the drawings. Embodiments may span multiple views of the drawings. The same reference numerals in the embodiments generally indicate the same or corresponding elements. Therefore, the descriptions of the embodiments are incorporated into each other, and the description of the subject matter common to the embodiments is generally not repeated here. Unless clearly indicated to the contrary, each aspect or embodiment defined herein may be combined with any other one or more aspects or one or more embodiments. In particular, any feature indicated as preferred or advantageous may be combined with any other feature indicated as preferred or advantageous.

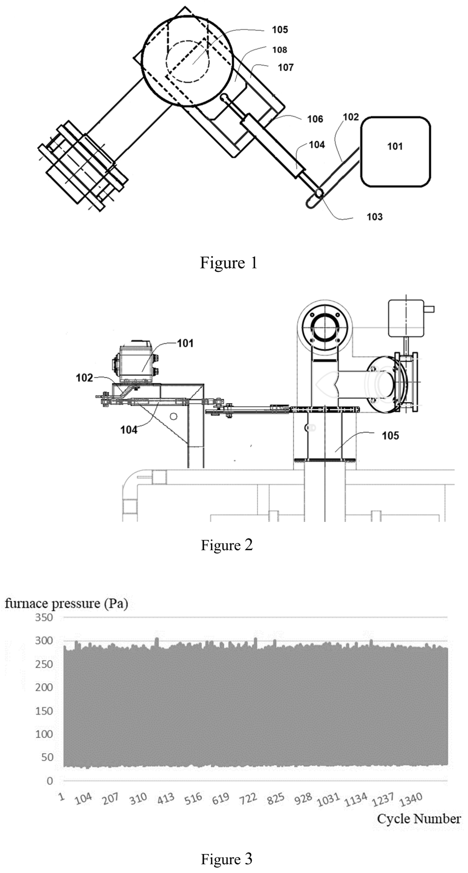

As shown in FIG. 1 and FIG. 2, the furnace atmosphere control device in the present application comprises:
an adjustment device, wherein the adjustment device comprises a flow regulation unit and/or an exhaust unit, wherein the flow regulation unit is connected to a gas supply device that supplies oxygen-enriched gas into a furnace;
wherein the exhaust unit comprises:
   a cover plate 108, wherein the cover plate 108 partially covers an outlet 105 of the exhaust unit;
   a connecting rod 104, wherein one end of the connecting rod 104 is connected to a crank 102 and the other end is connected to the cover plate 108;
   a crank 102, wherein one end of the crank 102 is connected to an actuator 101 and the other end is pivotally connected to the connecting rod 104 via a crank pin 103;
   an actuator 101, wherein the actuator 101 receives an input signal to implement angle and/or position control of the connecting rod 104;
   a sensor system, wherein the sensor system comprises an oxygen concentration sensor, a moisture analyzer, a pressure sensor, and/or a temperature sensor; and
   a control unit, wherein the control unit communicates with the adjustment device, the sensor system, and the gas supply device, and the control unit is programmed to regulate an intake flow rate of the oxygen-enriched gas and/or an area of the outlet of the exhaust unit.

Preferably, the control unit is programmed to only regulate the area of the outlet 105 of the exhaust unit, i.e., the position of the cover plate 108.

The cover plate 108 is a sliding cover that slides along a guide rail 107.

The connecting rod 104 is used to push and pull the cover plate 108 to move, changing the position of the cover plate 108, thereby changing the area of the outlet 105 of the exhaust unit. Different positions of the cover plate 108 correspond to different areas of the exhaust unit outlet.

The base of the crank 102 is attached to the end region of the crank by welding or otherwise. For example, a crank pin 103 is configured to pivotally connect the crank 102 and the connecting rod 104.

The control unit is programmed to receive signals indicating furnace oxygen concentration, water content, pressure, and temperature from the oxygen concentration sensor, the moisture analyzer, the pressure sensor, and the temperature sensor, respectively. The control unit may be an analog or digital control system. The control unit is preferably mathematical and programmable. The control unit generally controls the batch process of the calcination furnace, for example, regulating the intake flow rate of oxygen-enriched gas and the mechanical drive of the exhaust unit, etc. Each constituent element of the control unit may also be constituted by an information processing apparatus (e.g., computer, server) having a memory, a processor, and a software program, a dedicated circuit, firmware, etc. Various set values are input to the control unit, or various set values are stored in the memory. Various set values (also used as input data described later) include, for example, specifications related to the calcination furnace (type, volume, capacity), data related to materials, process data, required energy values, temperature set values, batch data, etc., which are stored in the memory.

The control unit associates the measured furnace temperature, pressure, water content, oxygen concentration, intake flow rate of oxygen-enriched gas, position of the cover plate, or area of the outlet of the exhaust unit, and stores them in the memory.

The oxygen-enriched gas enters the furnace via the flow regulation unit. The flow regulation unit performs proportional control on the flow rate of the oxygen-enriched gas based on signals from the control unit, allowing for more or less intake flow rate of oxygen-enriched gas. Gases discharged from the calcination furnace, including water vapor, carbon dioxide, etc., leave the calcination furnace via the exhaust unit. The exhaust unit communicates with the outside of the furnace via its outlet.

The calcination furnace has walls defining the furnace atmosphere, including side walls, a top wall, and a bottom wall. The atmosphere in the furnace region is differentially affected by at least one furnace parameter (factor data), including but not limited to: intake flow rate of oxygen-enriched gas, oxygen concentration, water content, temperature, pressure.

The pressure sensor is used to measure the total pressure in the furnace atmosphere. The oxygen concentration sensor reflects the oxygen partial pressure of the furnace atmosphere. Multiple pressure sensors and other sensors may be installed at different positions in each furnace. The pressure sensor may be close to the sagger to measure the atmosphere exposed to the cathode material. A sampling line may also be used, with one end of the sampling line extending outward through the wall of the calcination furnace and the other end exposed to an opening inside the furnace.

Exemplarily, the pressure sensor is electrically connected to the control unit. The control unit receives signals from the pressure sensor and regulates the position of the cover plate by communicating with the exhaust unit.

The oxygen concentration sensor, the moisture analyzer, and the pressure sensor may all employ sampling tubes known to those skilled in the art to sample from the furnace atmosphere. The inlet for the oxygen-enriched gas flowing from the gas supply device is at the bottom of the calcination furnace. The sampling tube of the oxygen concentration sensor extends to a position near the top of the calcination furnace, away from the inlet of the oxygen-enriched gas. The oxygen concentration sensor comprises zirconia or any other oxygen sensor suitable for measuring oxygen in a highly oxidizing atmosphere. As used herein, the oxygen concentration sensor is capable of measuring the oxygen concentration in the furnace atmosphere.

The temperature sensor is mounted on the furnace wall or directly exposed to the furnace atmosphere. The temperature sensor is any sensor configured to perform temperature measurement by contact, such as a thermocouple. As a non-limiting example, continuous measurement may be performed by one or more installed thermocouples, each thermocouple being embedded or open to the furnace atmosphere, and continuously measuring the temperature in the furnace.

The moisture analyzer is capable of effectively measuring the absolute value of water content in a high temperature (temperature higher than 150°C) environment.

Examples of the flow regulation unit include a mass flow controller or a control valve. A pressure control part may also be provided instead of the flow regulation unit or together with the flow regulation unit. Examples of the pressure control part include a pressure gauge, a pressure adjustment valve, a back pressure valve, etc.

During the pushing and pulling process, the cover plate 108 tends to hit the inner wall of the exhaust unit, producing debris and causing failure. Therefore, a limit block 106 is installed on the side of the exhaust unit outlet, according to the position where the exhaust unit outlet opening is maximum and the positions of the connecting rod 104 and the cover plate 108, to ensure that the cover plate 108 will not be squeezed against the inner wall of the exhaust unit outlet. The exhaust unit outlet here may be an opening or a pipe structure. The cover plate 108 here may be in the form of a sliding cover.

That is, the actuator 101 (or operator) is a driving execution device that receives an input signal to implement opening, closing, and angle/position control. The actuator 101 drives the rotation of the crank 102 to be converted into linear motion of the connecting rod 104, so that the cover plate 108 can move away from or toward the exhaust unit outlet 105 to change the outlet area. Driven by electric signals, the crank 102 rotates between 0 and 90°, thereby linearly pushing and pulling the cover plate 108.

When the intake flow rate of the oxygen-enriched gas remains constant, the exhaust volume is changed by changing the physical position of the cover plate, thereby affecting the furnace pressure. For example, if the cover plate is moved to reduce the area of the exhaust unit outlet, the oxygen partial pressure inside the furnace rises.

The device and method of the present invention can continuously measure each factor data in real-time to achieve control of continuous fluctuation of furnace pressure. This type of process requires the oxygen-enriched gas to expose to the raw cathode material very uniformly. For example, every sagger in every calcination furnace can expose to sufficient oxygen. Some methods of the prior art observe that in the saggers inside the calcination furnace, especially the deep bottom raw materials, have less contact with oxygen. In contrast, it is seen that the surface raw materials have a better chance of contacting oxygen. Therefore, for deep saggers or deep raw materials, the quality of roasting is not so good. These disadvantages can be overcome by the device and method of the present invention. The raw cathode material inside the sagger itself has a stacking thickness, and insufficient oxygen partial pressure makes it difficult for oxygen to penetrate the material. To address this issue, one of the objectives of the present application is to create appropriate fluctuation and agitation of the oxygen partial pressure inside the furnace through continuous control of furnace pressure, promptly and rapidly reducing dead zones of oxygen concentration. Thus, oxygen fully contacts the raw cathode material for reaction, rather than relying purely on natural dispersion of oxygen as in the prior arts.

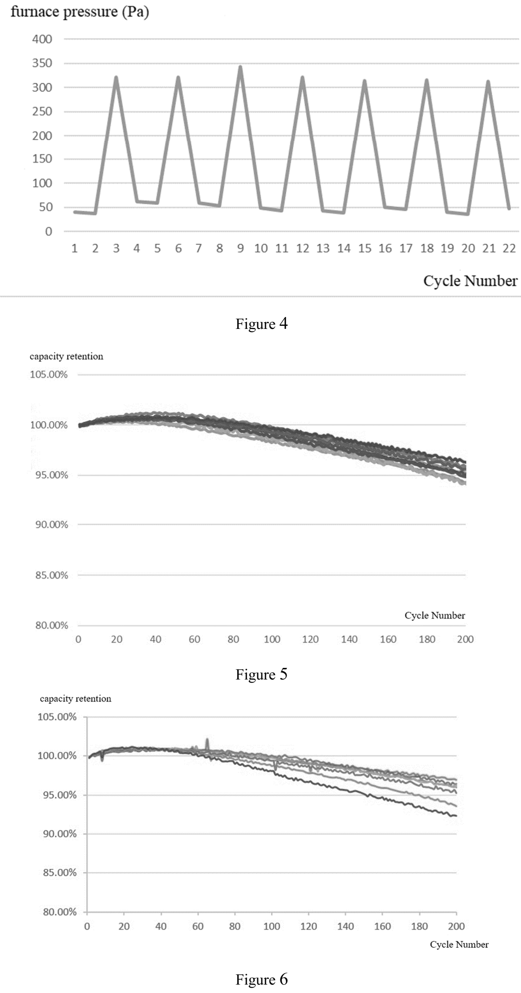

Exemplarily, the furnace pressure value (gauge pressure value) inside the furnace maintains between 0 and 300 Pa to keep a positive pressure environment inside the furnace. In all continuously operating calcination furnaces, the pressure of the atmosphere is controlled to be a positive pressure in terms of gauge pressure. FIG. 3 shows a furnace pressure trend chart within 12 hours. Calculated with one cycle every 30 seconds, i.e., the gauge pressure is read and recorded every 30 seconds. The gauge pressure is stably maintained at a positive pressure in the range of 250 to 300 Pa. As used above, the cover plate moving from an initial position to a maximum outlet area and then back to the initial position, or vice versa, is referred to as one cycle. The pressure sensor indicates that the gauge pressure value inside the furnace fluctuates in continuous cycles, like a "pulsed" fluctuation. That is, the cover plate moves continuously within one cycle. FIG. 4 shows a furnace pressure trend chart in 22 randomly selected cycles. It can be seen that the furnace pressure continuously fluctuates in the range of 0 to 300 Pa, forming turbulence of furnace pressure and promoting oxygen penetration into the raw cathode material.

The gas supply device is connected to a mass flow controller at the inlet of each calcination furnace. The gas supply device communicates with an oxygen source and is used to optimize the intake flow rate of oxygen-enriched gas for each calcination furnace to maintain a high oxygen concentration. At the same time, carbon dioxide, water vapor, and other impurities discharge, and an ideal atmosphere flow direction is maintained.

The intake flow rate of oxygen-enriched gas at the inlet of each calcination furnace can be fixed or variable. The one or more standard operating modes and corresponding standard parameters may remain constant over time, for example, there is no predetermined change in the intake flow rate of oxygen-enriched gas, etc.

Multi-stage heat treatment requires maintaining the atmosphere at a high oxygen concentration in each of its stages. Calcination furnace pressure and various sensors are installed at selected locations to monitor the flow pattern of the furnace atmosphere. Parameters including but not limited to temperature, oxygen concentration, moisture, and carbon dioxide concentration are preferably used to verify whether the calcination furnace atmosphere is operating under optimal conditions, determining the optimal operation of the calcination furnace atmosphere control system, by correlating atmospheric conditions with the quality of the cathode material product.

The above furnace atmosphere control device controls the furnace atmosphere. Using standard or past data models generated from furnace parameters related to the furnace process and exhaust, including the characteristic parameter corresponding to each factor data. Wherein, each factor data is, for example, oxygen concentration, temperature, pressure, water content, etc., related to the atmosphere inside the furnace. The characteristic parameters include the corresponding moving distance of the cover plate along the axial direction of the connecting rod, the area of the outlet of the exhaust unit, and/or the flow rate value of the flow regulation unit.

Each sensor can be used to continuously or discontinuously measure each factor data in the furnace and communicate with the control unit. At the same time, the corresponding characteristic parameters are stored in the control unit.

In the control step, based on each factor data, the control unit correspondingly performs the following controls on the characteristic parameters:
(1) in the case where the area of the outlet of the exhaust unit is unchanged, decreasing or increasing the intake flow rate of oxygen-enriched gas supplied into the furnace relative to a set value; or
(2) in the case where the intake flow rate of oxygen-enriched gas is unchanged, moving the cover plate along the axial direction of the connecting rod so that the area of the outlet of the exhaust unit decreases or increases; or
(3) increasing the intake flow rate of oxygen-enriched gas supplied into the furnace relative to a set value, and moving the cover plate so that the area of the outlet of the exhaust unit increases; or
(4) decreasing the intake flow rate of oxygen-enriched gas supplied into the furnace relative to a set value, and moving the cover plate so that the area of the outlet of the exhaust unit decreases.

Oxygen-enriched gas flows into the calcination furnace, and calcination of the cathode material begins. The sensor system works to compare actual measured values with preset values. The preset values can be set by an operator or can be standard values obtained based on prior tests. When the pressure value inside the furnace is lower than the preset value, the control unit sends a signal to the actuator to move the position of the cover plate through the cooperation of the crank and the connecting rod, reducing the area of the outlet of the exhaust unit. Alternatively, the control unit sends a signal to the flow regulation unit to increase the intake flow rate of oxygen-enriched gas. The control unit will continue to read the measured value of the pressure sensor until the gauge pressure is greater than or equal to the pressure set value.

When the furnace pressure value is greater than the pressure set value, the control unit sends a signal to the actuator to move the position of the cover plate, increasing the area of the outlet of the exhaust unit. The above control steps can be executed in continuous cycles.

The oxygen concentration, temperature, pressure, and water content data measured by respective sensors are transmitted to the control unit and compared with stored or default preset values. The preset values correspond to characteristic parameters of each factor data generally expected in a given stage of the calcination furnace, as well as operating parameters, including one or more flow rate values of oxygen-enriched gas controlled by the flow regulation unit entering the calcination furnace.

In this case, the control unit generates a control signal, which is used to regulate each characteristic parameter, such as the moving distance of the cover plate along the axial direction of the connecting rod, the area of the outlet of the exhaust unit, and/or the flow rate value of the flow regulation unit.

When multiple calcination furnaces are operating simultaneously, the preset values of each factor data in each calcination furnace may be different, and may be dynamically adjusted by the control unit based on the sensor measured values.

Capacity retention is an important indicator of the cycling stability of cathode materials.

The cathode materials prepared using the device and method of the present application were assembled into a secondary battery according to a conventional method for testing. Two hundred (200) charge and discharge cycles were performed at a constant current in a voltage range of about 3.0 V to 4.2 V at room temperature (about 20 to 25°C). The capacity retention results of the cyclic charge-discharge test are shown in FIG. 5.

The capacity retention of the secondary battery after the n-th cycle was calculated using the following equation: Capacity retention (%) = [Discharge capacity at n-th cycle / Discharge capacity at 1st cycle] × 100%

As a comparative example, a comparative cathode material obtained without configuring the device of the present application was assembled into a secondary battery for testing. The capacity retention of the secondary battery after multiple cycles is shown in FIG. 6.

FIG. 5 shows a highly balanced capacity retention. This indicates that both the surface layer and the bottom layer (deep layer) cathode materials achieved sufficient calcination and reached uniform sintering efficiency. The performance of the prepared cathode material is more stable.

Whereas for the comparative cathode material shown in FIG. 6, the gap in capacity retention gradually increased after 50 cycles. As the number of cycles increased, the stability of the capacity retention deteriorated.

This means that the extent of penetration and diffusion of oxygen-enriched gas into the cathode material is a key factor affecting the electrochemical performance of the cathode material. The above device and method of the present application can effectively improve the capacity retention, cycle performance, and rate performance.

What is described in this specification is only preferred specific embodiments of the present application. The above embodiments are only used to illustrate the technical solution of the present application rather than to limit the present application. Technical solutions that can be obtained by those skilled in the art through logical analysis, reasoning, or limited experimentation based on the concept of the present application shall all fall within the scope of the present application.

## Claims

1. A furnace atmosphere control device, comprising:
an adjustment device, wherein the adjustment device comprises a flow regulation unit, and/or an exhaust unit, wherein the flow regulation unit is connected to a gas supply device that supplies oxygen-enriched gas into the furnace;
wherein the exhaust unit comprises:
a cover plate (108), wherein the cover plate (108) partially covers an outlet (105) of the exhaust unit;
a connecting rod (104), wherein one end of the connecting rod (104) is connected to a crank (102) and the other end is connected to the cover plate (108), and the connecting rod is used to push and pull the cover plate to move;
a crank (102), wherein one end of the crank (102) is connected to an actuator (101) and the other end is pivotally connected to the connecting rod (104); and
an actuator (101), wherein the actuator (101) receives an input signal to implement angle and/or position control of the connecting rod (104);
a sensor system, wherein the sensor system is selected from the group consisting of: an oxygen concentration sensor, a moisture analyzer, a pressure sensor, a temperature sensor, and combinations thereof; and
a control unit, wherein the control unit communicates with the adjustment device, the sensor system, and the gas supply device, and the control unit is programmed to regulate an intake flow rate of the oxygen-enriched gas and/or an area of the outlet (105) of the exhaust unit.

2. The furnace atmosphere control device according to claim 1, wherein when the intake flow rate of the oxygen-enriched gas remains constant, the control unit is programmed to only regulate the area of the outlet (105) of the exhaust unit.

3. The furnace atmosphere control device according to claim 1, wherein a rotational motion of the crank driven by the actuator is converted into a linear motion of the connecting rod.

4. The furnace atmosphere control device according to claim 3, the crank rotates between 0 and 90°, thereby linearly pushing and pulling the cover plate.

5. The furnace atmosphere control device according to claim 1, wherein the control unit is programmed to receive signals indicating oxygen concentration, water content, pressure, and temperature from the oxygen concentration sensor, the moisture analyzer, the pressure sensor, and the temperature sensor, respectively.

6. The furnace atmosphere control device according to claim 1, wherein the pressure sensor indicates that a pressure value fluctuates in continuous cycles.

7. A cathode material calcination apparatus, comprising a calcination furnace, at least one gas supply device, and the furnace atmosphere control device according to any one of claims 1 to 6.

8. A continuous real-time furnace atmosphere control method, wherein based on at least one measured factor data, a characteristic parameter is regulated using the furnace atmosphere control device according to any one of claims 1 to 6, wherein the characteristic parameter comprises a moving distance of the cover plate along an axial direction of the connecting rod, the area of the outlet of the exhaust unit, and/or a flow rate value of the flow regulation unit.

9. The furnace atmosphere control method according to claim 8, wherein each factor data comprises the intake flow rate of the oxygen-enriched gas, oxygen concentration, temperature, pressure, and water content.

10. The furnace atmosphere control method according to claim 8, wherein based on each factor data, the control unit correspondingly performs the following controls according to the generated characteristic parameter:
(1) decreasing or increasing the supplied intake flow rate of the oxygen-enriched gas relative to a set value; or
(2) decreasing or increasing the area of the outlet of the exhaust unit; or
(3) increasing the supplied intake flow rate of the oxygen-enriched gas relative to a set value, and increasing the area of the outlet of the exhaust unit; or
(4) decreasing the supplied intake flow rate of the oxygen-enriched gas relative to a set value, and decreasing the area of the outlet of the exhaust unit.

11. The furnace atmosphere control method according to claim 8, comprising the steps of:
(i) transmitting the oxygen concentration, temperature, pressure, and water content measured by respective sensors to the control unit, and comparing them with stored or default preset values;
(ii) generating, by the control unit, a control signal, wherein the control signal is used to regulate each characteristic parameter.
